# EUROPEAN PATENT SPECIFICATION

(11) **EP 3 986 218 B1**
(45) Date of publication and mention of the grant of the patent: **21.12.2022**
(21) Application number: 20742476.3
(22) Date of filing: 18.06.2020
(51) Int. Cl.: A47J 31/54

(54) **CONTINUOUS-FLOW ELECTROMAGNETIC-INDUCTION FLUID HEATER IN A BEVERAGE VENDING MACHINE**
ELEKTRISCHER DURCHLAUFERHITZER MIT KONTINUIERLICHER STRÖMUNG IN EINEM VERKAUFSAUTOMATEN ZUR ZUBEREITUNG VON GETRÄNKEN
DISPOSITIF DE CHAUFFAGE DE FLUIDE À INDUCTION ÉLECTROMAGNÉTIQUE À ÉCOULEMENT CONTINU DANS UN DISTRIBUTEUR AUTOMATIQUE POUR PRÉPARER DES BOISSONS

(30) Priority: 18.06.2019 IT 201900009384
(43) Date of publication of application: 27.04.2022
(73) Proprietor: Rheavendors Services S.P.A., 22100 Como (IT)
(72) Inventor: BRUZZESE, Fabio, 22100 Como (IT)
(74) Representative: Martini, Gabriele
(86) International application number: PCT/IB2020/055727
(87) International publication number: WO 2020/255028

(56) References cited:
- EP-A1- 1 380 243
- DE-A1-102007 034 370
- FR-A1- 2 855 359
- JP-A- 2001 284 034

## Description

### Cross-Reference To Related Patent Applications

This patent application claims priority from Italian patent application no. 102019000009384 filed on 18.06.2019.

### Technical Field

The present invention relates in general to the field of beverage vending machines, and in particular to a continuous-flow electromagnetic-induction fluid heater for heating a fluid, in particular water, milk, air or the like, in a beverage vending machine, in order to prepare hot beverages from an anhydrous material, for instance coffee, tea, hot chocolate or the like.

### Background Art

Beverage vending machines, in particular for preparing beverages hot beverages from an anhydrous material, for instance coffee, tea, hot chocolate or the like, are known.

Such beverage vending machines are provided with one or more heaters configured to heat the water, for instance boilers or kettles. Known heaters generally comprise a heating element made of a resistive material and apt to heat the water held inside a tank or container of the machine.

More specifically, the heating element is permanently immersed in the water held in the container; a potential difference is applied to the ends of the heating element. An electric current is thus generated within the latter which, by the Joule effect, dissipates energy in the form of heat, thus heating the water by conduction.

It is thus necessary to maintain the water held in the container at a desired temperature so as to guarantee a rapid dispensing of the beverage.

It follows that, if the machine remains inactive for long periods, a considerable amount of energy will be consumed to maintain the water inside the container at the desired temperature (usually above 85°C).

Moreover, the heaters mentioned above are of the accumulator type, i.e. of the type in which a given volume of water is held in the container and in which the water is heated and maintained at the desired temperature; when the dispensation of a certain volume of hot water is requested to prepare a corresponding beverage, the hot water drawn from the container is replenished with water at room temperature. The water in the container thus needs to be heated and raised again to the desired temperature so as to guarantee that the next dispensation occurs at the desired temperature.

In the latter case, a waiting period is thus necessary for re-heating the water, the duration of which depends on the quantity of hot water dispensed during one or more previous dispensations.

Besides temperature, an important specification to be met is the flow rate of the hot water dispensed, which depends above all on the type of beverage to be prepared; for instance, in the case of beverages produced by means of soluble substances, a considerable (at least 10 cc/s) flow rate of hot water is required. With a high flow rate of dispensed hot water, there will be a rapid drop in the temperature of the water held in the container, resulting in long waiting times for a subsequent dispensation or in an obtained beverage in which the soluble substance can form lumps.

FR-A-2855359, EP-A-1380243 and DE-A-102007034370 illustrate examples of continuous-flow water heaters for heating water by means of heat produced with electrical resistances.

The problems described above relating to the heating of the water in beverage vending machines stem from the thermal inertia with which a given mass of water heats up.

In order to remedy these technical drawbacks, solutions which exploit the phenomenon of electromagnetic induction for heating the water are known.

In particular, continuous-flow water heaters are known which exploit electromagnetic induction in order to generate parasitic currents within a duct made of an electrically conductive material inside which the water to be heated flows. The parasitic currents dissipate energy, by the Joule effect, in the form of heat, thus heating the duct and, consequently, the water that flows in contact with the same.

Electromagnetic induction heaters are known to be particularly advantageous inasmuch as they allow a rapid heating of the water.

EP-A-2868242, of the present Applicant, describes a heater comprising a metal duct wound in the shape of a spiral and housed in a cavity of a spool made of an electrically insulating material and on which a winding of electromagnetic induction is wound.

The winding is supplied with alternating electric current which generates, by electromagnetic induction, parasitic currents which heat, by the Joule effect, the spiral metal duct and thus the water which flows inside the same.

The spool is attached to the support structure of the machine, while the metal duct has no mechanical attachments with the spool, being simply supported by the hydraulic circuit to which it is connected by means of simple quick (push-in) fittings.

More specifically, the metal duct and the spool are separated radially by a free space (air gap).

This way, the maintenance of the heater and, in particular, the replacement of the metal duct is easier, more economical and simplified.

JP-A-2001284034 describes an example continuous-flow water heater by electromagnetic induction.

### Object and Summary of the Invention

Although the heater of the type described above represents a functionally viable solution for heating the water in beverage vending machines, the Applicant has had the opportunity to verify that the known heaters are capable of further improvement, in particular with respect to the efficiency of the heat exchange achievable by means of the heater.

The object of the present invention is to realize a continuous-flow electromagnetic-induction fluid heater, which is very reliable and of limited cost, and which makes it possible to satisfy the requirement specified above in connection with the known heaters.

According to the invention, this object is achieved by a continuous-flow electromagnetic-induction fluid heater and by a vending machine for preparing hot beverages comprising such a continuous-flow electromagnetic-induction fluid heater as claimed in the attached claims.

### Brief Description of the Drawings

Figure 1 is a schematic perspective view, with parts removed for clarity, of a supply and heating assembly comprising a heater realized in accordance with a first preferred embodiment of the present invention;
Figure 2 illustrates, on an enlarged scale and with parts removed for clarity, an axial section along the line II-II shown in Figure 1;
Figure 3 illustrates a cross-section along the line III-III shown in Figure 2;
Figure 4 is analogous to Figure 2 and illustrates a corresponding axial section, on an enlarged scale and with parts removed for clarity, of a heater in accordance with a second preferred embodiment of the invention;
Figure 5 is analogous to Figure 3 and illustrates a corresponding cross-section of the heater shown in Figure 4;
Figure 6 is analogous to Figure 2 and illustrates a corresponding axial section, on an enlarged scale and with parts removed for clarity, of a heater in accordance with a third preferred embodiment of the invention; and
Figure 7 is analogous to Figure 3 and illustrates a corresponding cross-section of the heater shown in Figure 6.

### Detailed Description of Preferred Embodiments of the Invention

The present invention will be described in the following with reference to water heating without relinquishing any generality as a result, as it can also be used to heat other types of fluids utilized in beverage vending machines, in particular liquid milk or air used for emulsifying the liquid milk or fluids other than water.

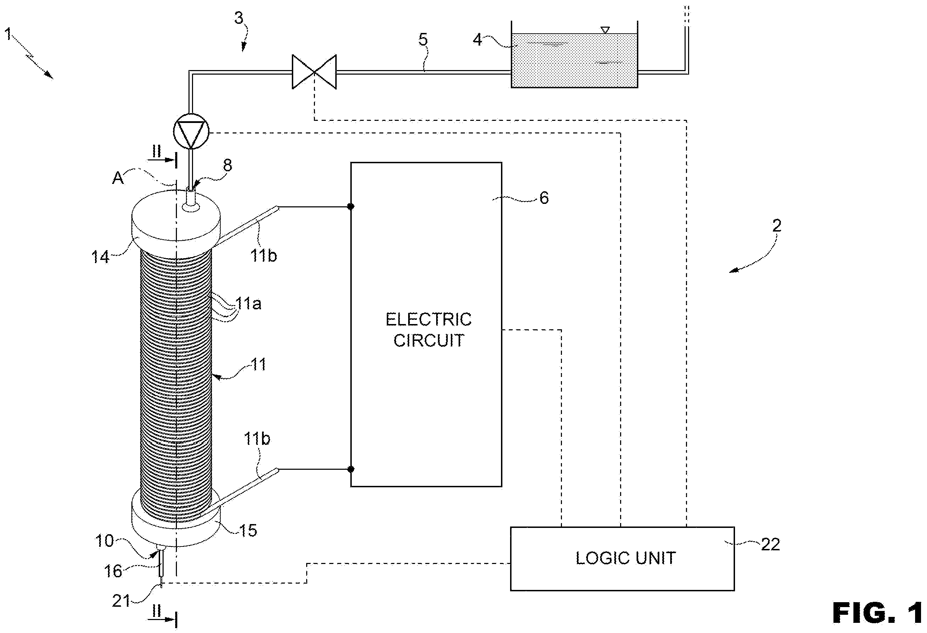

With reference to Figures 1 to 3, a continuous-flow electromagnetic-induction fluid heater for heating a fluid, in particular water, in a beverage vending machine (not shown), in particular for preparing hot beverages from an anhydrous material, for instance coffee, tea, hot chocolate or the like, is indicated as a whole by 1.

In particular, the heater 1 is part of a supply and heating assembly 2 of the aforementioned beverage vending machine, which comprises:
- a hydraulic supply circuit 3 (shown schematically in Figure 1) provided with a container 4 containing water, preferably water at room temperature, and configured to conduct a flow of water from the container 4 towards the heating device 1 by means of a tube 5; and
- an electric circuit 6 (shown schematically in Figure 1), the function of which will be clarified in the following.

In detail, the heater 1 is connected to the electric circuit 6 and fluidically connected to the hydraulic circuit 3.

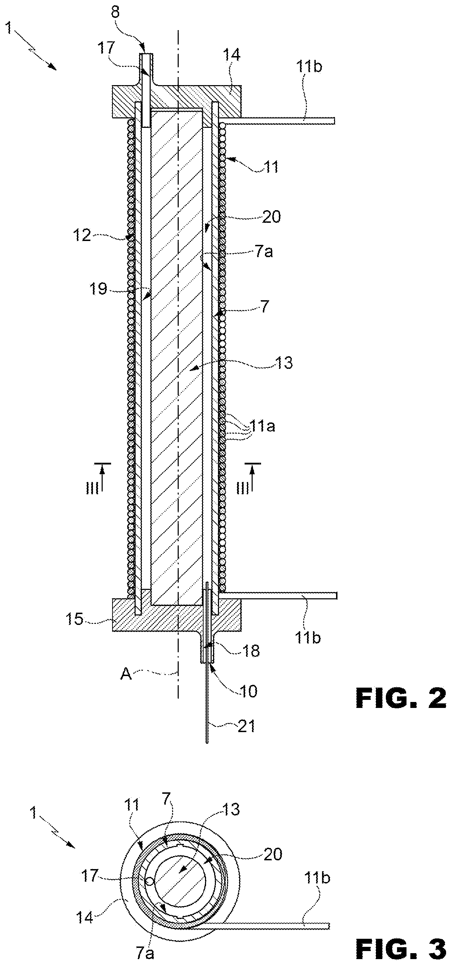

As shown in Figure 2, the heater 1 comprises a tubular body 7 internally defining a flow channel 7a for the water. The tubular body 7 is thus hollow, has a longitudinal axis A and comprises an inlet opening 8 through which the water to be heated conveyed by the hydraulic circuit 3 is fed, in use, to the channel 7a, and an outlet opening 10 through which the heated water flows out, in use, from the channel 7a.

According to this preferred and non-limiting embodiment, the tubular body 7 is substantially rectilinear, while the channel 7a is obtained coaxially to the axis A and has a substantially circular cross-section.

According to an alternative embodiment not shown, the tubular body 7 and/or the channel 7a may have a non-rectilinear configuration, for instance including one or more curved sections; moreover, the channel 7a may have a non-circular cross-section (for instance elliptical, oval, square, rectangular, polygonal, etc.).

The tubular body 7 is attached to an internal support structure (not shown) of the machine, in a known manner not described in detail.

In particular, the heater 1 comprises an upper end portion 14 and a lower end portion 15, arranged on axially opposite sides of the tubular body 7, fixed to the tubular body 7 and apt to be coupled (in particular mounted) to the internal support structure of the machine.

More particularly, the upper end portion 14 and the lower end portion 15 define respective axial closing elements of the tubular body 7.

In one embodiment, the upper end portion 14 and the lower end portion 15 are coupled to the tubular body 7 in a removable manner, for instance by means of a threaded coupling.

As shown in Figures 1 and 2, the inlet opening 8 and the outlet opening 10 are defined by respective protuberances extending axially from the upper end portion 14 and from the lower end portion 15, respectively.

In detail, the upper end portion 14 defines internally a passage 17 which connects the inlet opening 8 fluidically to the channel 7a, thus permitting the water to pass through the upper end portion 14 and flow into the channel 7a.

Similarly, the lower end portion 15 defines internally a passage 18 which connects the channel 7a fluidically to the outlet opening 10, thus permitting the water to pass through the lower end portion 15 and flow out of the tubular body 7.

In light of the above, the inlet opening 8 and the outlet opening 10 are arranged at respective opposite axial ends of the tubular body 7.

In the example shown, the outlet opening 10 is fluidically connected to an outlet tube 16 (Figure 1). This outlet tube 16 is configured to conduct the heated water from the heating device 1 to a beverage production chamber (not shown), where the heated water laps the anhydrous material generally contained in a capsule pierced beforehand. The thus obtained beverage is then conveyed from the production chamber to a dispenser (also not shown), by means of which it is discharged from the machine.

The heater 1 further comprises a winding 11 defined by a plurality of concentric spirals 11a wound directly in contact around an external surface 12 of the tubular body 7.

In detail, the winding 11 is configured to be supplied with an alternating electric current at a given oscillation frequency and to generate, in this manner, an electromagnetic induction field.

In greater detail, the electric circuit 6 applies, in use, an alternating voltage to respective ends 11b of the winding 11, thus generating the aforementioned alternating electric current and the aforementioned electromagnetic induction field.

Preferably, the tubular body 7 is made of a material having zero magnetic susceptibility.

In this way, the tubular body 7 interacts with the electromagnetic induction field generated by the winding 11 to a minimal extent or essentially not at all, thus preventing a disturbance of the latter.

The heater 1 further comprises a heating element 13, which is arranged inside the channel 7a so as to be lapped, in use, by the flow of water flowing inside said channel 7a and which can be activated, in use, by means of the electromagnetic induction field generated by the winding 11.

Specifically, by supplying the winding 11 with alternating electric current, an alternating electromagnetic induction field is generated, the flux lines of which meet inside the channel 7a and, in particular, pass through the heating element 13. According to Faraday's law, the variation in the resulting electromagnetic induction field flux generates parasitic currents inside the heating element 13, which heat the heating element 13 by the Joule effect.

The heating element 13 is conveniently made of a ferromagnetic material. In this way, the lines of the electromagnetic induction field are closer together inside the heating element 13, optimizing the generation of the parasitic currents, and are not dissipated inside the tubular body 7.

In use, the water that flows inside the channel 7a laps the heating element 13 and is therefore heated by means of a heat exchange by conduction.

As shown in Figure 2, the heating element 13 is radially spaced from the tubular body 7, more precisely from an internal surface 19 of the channel 7a, by means of a gap 20 inside of which the water, in use, flows.

In detail, the heating element 13 extends axially inside the channel 7a, from the upper end portion 14 to the lower end portion 15 without ever contacting the internal surface 19 of the channel 7a. More specifically, the heating element 13 is fixed to the upper and lower end portions 14 and 15.

According to this preferred and non-limiting embodiment, the heating element 13 has a substantially circular cross-section and is housed inside the channel 7a coaxially to the axis A.

Accordingly, the gap 20 has a substantially annular cross-section.

According to an alternative embodiment not shown, the heating element 13 may have a non-circular cross-section, for instance elliptical, oval, square, rectangular, polygonal, etc.

In the example shown in Figures 2 and 3, the heating element 13 comprises, in particular is constituted by, a single bar element.

As shown in Figures 1 and 2, the supply and heating assembly 2 further comprises a temperature sensor 21 configured to measure the temperature of the water at the outlet opening 10.

In particular, the sensor 21 is arranged, at least partially, inside the passage 18 of the lower end portion 15 of the heater 1 and is thus configured to measure, with an acceptable degree of approximation, the temperature of the water at the outlet opening 10.

The assembly 2 further comprises a logic unit 22 configured to obtain the temperature values measured by the sensor 21.

The logic unit 22 is also configured to control the activation and the deactivation of the electric circuit 6, as well as to control the oscillation frequency of the alternating voltage applied by the electric circuit 6 to the winding 11.

In use, based on the temperature value of the outgoing water measured by the sensor 21, the logic unit 22 adjusts the oscillation frequency and thus the electric power output by the electric circuit 6. It is indeed known that a greater temperature corresponds to a greater electric power, as a result of the greater heat produced by the Joule effect by the heating element 13.

In this way, the logic unit 22 controls the variation of the temperature of the outgoing water.

Advantageously, the inlet opening 8 and the outlet opening 10 of the tubular body 7 are arranged in respective eccentric positions with respect to the axis A.

In particular, the inlet opening 8 and the outlet opening 10 are arranged in respective diametrically opposite positions with respect to the axis A.

In this way, the water flows, in use, inside the channel 7a, from the inlet opening 8 to the outlet opening 10, according to a non-laminar motion regime. Indeed, as the two inlet and outlet openings 8 and 10 are situated on diametrically opposite sides with respect to the axis A, the water flows inside the gap 20 in a vortex motion around the heating element 13 in such a manner as to render the contact of the fluid with said heating element 13 uniform.

The operation of the heater 1 according to the present invention will be described in the following, with particular reference to an initial condition in which the water at room temperature is inside the container 4.

In this condition, when a user orders the dispensing of a beverage, the logic unit 22 allows, by means of a system of valves and pumps of a known type (shown schematically in Figure 1), the flow of water to be heated through the inlet opening 8 and the passage 17 inside the tubular body 7.

Simultaneously, the logic unit 22 controls the activation of the electric circuit 6, which applies an alternating voltage at a given frequency to the ends 11b of the winding 11, thus generating an alternating electric current, which in turn generates the aforementioned electromagnetic induction field.

As described above, this field causes the heating of the heating element 13, which heats the water flowing inside the channel 7a and lapping said heating element 13.

When the heated water flows through the passage 18, the sensor 21 measures its temperature and sends the measured value to the logic unit 21. This way, a closed-loop control of the measured temperature is achieved.

The heated water is then conveyed by means of the tube 16 to the chamber for producing the selected beverage.

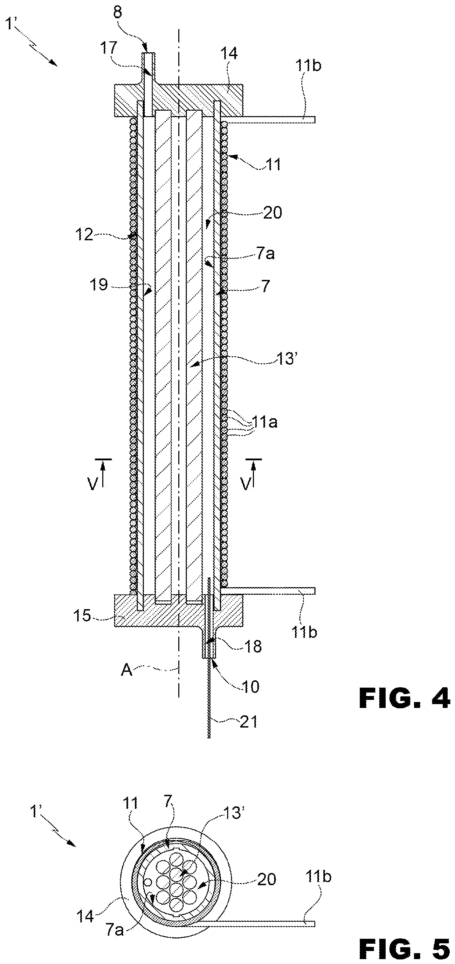

With reference to Figures 4 and 5, a continuous-flow heater realized in accordance with an alternative preferred embodiment of the present invention is indicated as a whole by 1'.

Since the heater 1' is similar by structure and operation to the heater 1, only the structural and functional differences with respect to the latter will be described in the following.

The same references will be used to indicate similar or equivalent parts and/or features.

In particular, the heater 1' differs from the heater 1 in that it is provided with a heating element 13' which comprises, in particular is constituted by, a plurality of bar elements.

More specifically, the heating element 13' is constituted by a bundle of bar elements having a smaller diameter than the diameter of the single bar element forming the heating element 13 of the heater 1.

Specifically, each of the bar elements of the heating element 13' extends axially inside the channel 7a, from the upper end portion 14 to the lower end portion 15.

More specifically, the bar elements are fixed to these upper and lower ends portions 14 and 15.

In use, the flow of water flowing inside the channel 7a laps each of the bar elements, running in the interstices of the channel 7a between the bar elements. The heat exchange is improved as a result, as the total transfer surface of the heating element 13' is greater than that of the heating element 13.

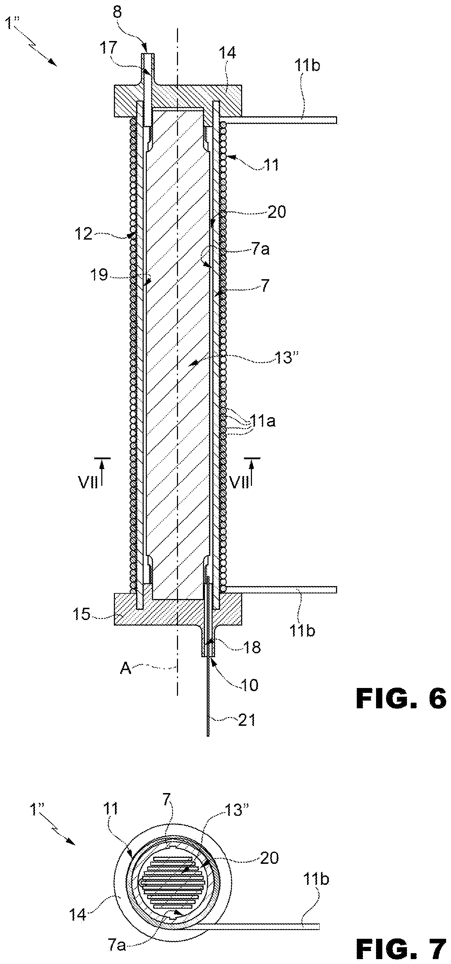

With reference to Figures 6 and 7, a continuous-flow heater realized in accordance with a further preferred embodiment of the present invention is indicated as a whole by 1".

Since the heater 1" is similar by structure and operation to the heater 1, only the structural and functional differences with respect to the latter will be described in the following.

The same references will be used to indicate similar or equivalent parts and/or features.

In particular, the heater 1" differs from the heater 1 in that it is provided with a heating element 13" which comprises, in particular is constituted by, a plurality of thin wall sheets.

Specifically, each of the sheets of the heating element 13" extends axially inside the channel 7a, from the upper end portion 14 to the lower end portion 15.

More specifically, the sheets are fixed to these upper and lower ends portions 14 and 15.

In use, the flow of water flowing inside the channel 7a laps each of the thin wall sheets, running in the interstices delimited between each pair of sheets. The heat exchange is improved as a result, as the total exchange surface of the heating element 13" is even greater than that of the heating element 13'.

From an examination of the features of the heaters 1, 1', 1" realized in accordance with the present invention, the advantages rendered achievable by the same become evident.

In particular, as a result of the arrangement of the inlet and outlet openings 8 and 10, it is possible to achieve a uniform flow of the water inside the channel 7a of the tubular body 7 so as to achieve a substantially vortex flow around the heating element 13, 13', 13" and thus an efficient and more uniform heat exchange with the latter.

Moreover, as a result of the shape of the heating element 13', it is possible to achieve an improved heat exchange, since the exchange surface is greater than that of the heating element 13.

Furthermore, as a result of the shape of the heating element 13", this improvement is even more perceptible, since the ratio between the exchange surface and the volume of the heating element 13" is greater in relation to the ratio between the exchange surface and the volume of the heating element 13, 13'.

It is evident that the described and shown heaters 1, 1', 1" can be modified and varied as long as they remain within the scope of the appended claims.

## Claims

1. A continuous-flow electromagnetic-induction fluid heater (1, 1', 1") for a beverage vending machine;
the continuous-flow electromagnetic-induction fluid heater (1, 1', 1") comprises:
- at least one tubular body (7) having a longitudinal axis (A), internally defining at least one channel (7a) for a fluid, and including at least one inlet opening (8) through which the fluid to be heated is fed, in use, to said channel (7a), and one outlet opening (10) through which the heated fluid flows out, in use, from said channel (7a);
- a heating element (13, 13', 13") arranged, at least partially, inside said channel (7a) so as to be lapped, in use, by the fluid; and
- an electric winding (11) wound directly in contact around an external surface (12) of said tubular body (7) and which can be electrically powered to generate an electromagnetic induction field and heat, in this manner, the heating element (13, 13', 13") due to the effect of said electromagnetic induction field;
said inlet and outlet openings (8, 10) are arranged at respective opposite axial ends of said tubular body (7) in eccentric positions with respect to said longitudinal axis (A).

2. The continuous-flow electromagnetic-induction fluid heater (1, 1', 1") as claimed in Claim 1, wherein said inlet and said outlet openings (8, 10) are arranged in respective diametrically opposite positions with respect to said axis (A).

3. The continuous-flow electromagnetic-induction fluid heater (1, 1', 1") as claimed in Claim 1 or 2, wherein said heating element (13, 13', 13") is radially spaced from an internal surface (19) of said channel (7a) through a gap (20) inside of which said fluid, in use, flows.

4. The continuous-flow electromagnetic-induction fluid heater (1, 1', 1") as claimed in any one of the preceding claims, wherein said heating element (13, 13', 13") is arranged coaxially to said axis (A).

5. The continuous-flow electromagnetic-induction fluid heater (1, 1', 1") as claimed in any one of the preceding claims, wherein said tubular body (7) is made of a material having zero magnetic susceptibility.

6. The continuous-flow electromagnetic-induction fluid heater (1, 1', 1") as claimed in any one of the preceding claims, wherein said channel (7a) has a substantially circular cross-section.

7. The continuous-flow electromagnetic-induction fluid heater (1, 1') as claimed in any one of the preceding claims, wherein said heating element (13, 13') comprises one or more bar elements or one or more thin wall sheets apt to be lapped, in use, by said fluid.

8. The continuous-flow electromagnetic-induction fluid heater (1, 1', 1") as claimed in Claim 7, wherein a bar element has a cross-section having a substantially circular shape.

9. A beverage vending machine comprising:
- a continuous-flow electromagnetic-induction fluid heater (1, 1', 1") as claimed in any one of the preceding claims;
- a fluid supply circuit (3) fluidically connected to said continuous-flow electromagnetic-induction fluid heater (1, 1', 1") for supplying it with a fluid; and
- an electric power supply circuit (6) electrically connected to said electrical winding (11) to electrically power it.

## Patentansprüche

1. Elektrischer Durchlauferhitzer mit kontinuierlicher Strömung (1, 1', 1") für einen Getränkeverkaufsautomaten;
wobei der elektrische Durchlauferhitzer mit kontinuierlicher Strömung (1, 1', 1") aufweist:
- mindestens einen rohrförmigen Körper (7) mit einer Längsachse (A), der im Inneren mindestens einen Kanal (7a) für ein Fluid definiert und mindestens eine Einlassöffnung (8), durch die das zu erwärmende Fluid bei Verwendung dem Kanal (7a) zugeführt wird, und eine Auslassöffnung (10), durch die das erwärmte Fluid bei Verwendung aus dem Kanal (7a) ausströmt, aufweist;
- ein Heizelement (13, 13', 13"), das zumindest teilweise innerhalb des Kanals (7a) so angeordnet ist, dass es bei Verwendung von dem Fluid umspült wird; und
- eine elektrische Wicklung (11), die direkt in Kontakt um eine Außenfläche (12) des rohrförmigen Körpers (7) gewickelt ist und die elektrisch angetrieben werden kann, um ein elektromagnetisches Induktionsfeld zu erzeugen und auf diese Weise das Heizelement (13, 13', 13") aufgrund der Wirkung des elektromagnetischen Induktionsfelds zu erwärmen;
wobei die Einlass- und die Auslassöffnung (8, 10) an jeweiligen gegenüberliegenden axialen Enden des rohrförmigen Körpers (7) in exzentrischen Positionen in Bezug auf die Längsachse (A) angeordnet sind.

2. Elektrischer Durchlauferhitzer mit kontinuierlicher Strömung (1, 1', 1") nach Anspruch 1, wobei die Einlass- und die Auslassöffnung (8, 10) in jeweiligen diametral gegenüberliegenden Positionen in Bezug auf die Achse (A) angeordnet sind.

3. Elektrischer Durchlauferhitzer mit kontinuierlicher Strömung (1, 1', 1") nach Anspruch 1 oder 2, wobei das Heizelement (13, 13', 13") von einer Innenfläche (19) des Kanals (7a) durch einen Spalt (20), innerhalb dessen das Fluid bei Verwendung strömt, radial beabstandet ist.

4. Elektrischer Durchlauferhitzer mit kontinuierlicher Strömung (1, 1', 1") nach einem der vorhergehenden Ansprüche, wobei das Heizelement (13, 13', 13") koaxial zu der Achse (A) angeordnet ist.

5. Elektrischer Durchlauferhitzer mit kontinuierlicher Strömung (1, 1', 1") nach einem der vorhergehenden Ansprüche, wobei der rohrförmige Körper (7) aus einem Material mit keinerlei magnetischer Suszeptibilität hergestellt ist.

6. Elektrischer Durchlauferhitzer mit kontinuierlicher Strömung (1, 1', 1") nach einem der vorhergehenden Ansprüche, wobei der Kanal (7a) einen im Wesentlichen kreisförmigen Querschnitt aufweist.

7. Elektrischer Durchlauferhitzer mit kontinuierlicher Strömung (1, 1') nach einem der vorhergehenden Ansprüche, wobei das Heizelement (13, 13') ein oder mehrere Stabelemente oder ein oder mehrere dünne Wandplatten aufweist, die geeignet sind, bei Verwendung von dem Fluid umspült zu werden.

8. Elektrischer Durchlauferhitzer mit kontinuierlicher Strömung (1, 1', 1") nach Anspruch 7, wobei ein Stabelement einen Querschnitt mit einer im Wesentlichen kreisförmigen Form aufweist.

9. Getränkeverkaufsautomat, aufweisend:
- einen elektrischen Durchlauferhitzer mit kontinuierlicher Strömung (1, 1', 1") nach einem der vorhergehenden Ansprüche;
- einen Fluidversorgungskreislauf (3), der mit dem elektrischen Durchlauferhitzer mit kontinuierlicher Strömung (1, 1', 1") fluidisch verbunden ist, um ihn mit einem Fluid zu versorgen; und
- eine elektrische Stromversorgungsschaltung (6), die mit der elektrischen Wicklung (11) elektrisch verbunden ist, um sie elektrisch anzutreiben.

## Revendications

1. Dispositif de chauffage de fluide à induction électromagnétique à écoulement continu (1, 1', 1") pour un distributeur automatique de boissons ;
le dispositif de chauffage de fluide à induction électromagnétique à écoulement continu (1, 1', 1") comprend :
- au moins un corps tubulaire (7) ayant un axe longitudinal (A), définissant à l'intérieur au moins un canal (7a) pour un fluide, et comprenant au moins une ouverture d'entrée (8) à travers laquelle le fluide à chauffer est amené, lors de l'utilisation, jusqu'audit canal (7a), et une ouverture de sortie (10) à travers laquelle le fluide chauffé sort, lors de l'utilisation, dudit canal (7a) ;
- un élément chauffant (13, 13', 13") disposé, au moins partiellement, à l'intérieur dudit canal (7a) de manière à être entouré, lors de l'utilisation, par le fluide ; et
- un enroulement électrique (11) enroulé directement en contact autour d'une surface externe (12) dudit corps tubulaire (7) et qui peut être alimenté électriquement pour générer un champ d'induction électromagnétique et chauffer, de cette manière, l'élément chauffant (13, 13', 13") par l'effet dudit champ d'induction électromagnétique ;
lesdites ouvertures d'entrée et de sortie (8, 10) sont disposées à des extrémités axiales opposées respectives dudit corps tubulaire (7) dans des positions excentriques par rapport audit axe longitudinal (A).

2. Dispositif de chauffage de fluide à induction électromagnétique à écoulement continu (1, 1', 1") selon la revendication 1, dans lequel lesdites ouvertures d'entrée et de sortie (8, 10) sont disposées dans des positions diamétralement opposées respectives par rapport audit axe (A).

3. Dispositif de chauffage de fluide à induction électromagnétique à écoulement continu (1, 1', 1") selon la revendication 1 ou 2, dans lequel ledit élément chauffant (13, 13', 13") est espacé radialement d'une surface interne (19) dudit canal (7a) par un espace (20) à l'intérieur duquel s'écoule ledit fluide, lors de l'utilisation.

4. Dispositif de chauffage de fluide à induction électromagnétique à écoulement continu (1, 1', 1") selon l'une quelconque des revendications précédentes, dans lequel ledit élément chauffant (13, 13', 13") est disposé coaxialement audit axe (A).

5. Dispositif de chauffage de fluide à induction électromagnétique à écoulement continu (1, 1', 1") selon l'une quelconque des revendications précédentes, dans lequel ledit corps tubulaire (7) est en un matériau ayant une susceptibilité magnétique nulle.

6. Dispositif de chauffage de fluide à induction électromagnétique à écoulement continu (1, 1', 1") selon l'une quelconque des revendications précédentes, dans lequel ledit canal (7a) a une section transversale sensiblement circulaire.

7. Dispositif de chauffage de fluide à induction électromagnétique à écoulement continu (1, 1') selon l'une quelconque des revendications précédentes, dans lequel ledit élément chauffant (13, 13') comprend au moins un élément en forme de barre ou au moins une feuille de paroi mince aptes à être entourés, lors de d'utilisation, par ledit fluide.

8. Dispositif de chauffage de fluide à induction électromagnétique à écoulement continu (1, 1', 1") selon la revendication 7, dans lequel un élément en forme de barre a une section transversale ayant une forme sensiblement circulaire.

9. Distributeur automatique de boissons comprenant :
- un dispositif de chauffage de fluide à induction électromagnétique à écoulement continu (1, 1', 1") selon l'une quelconque des revendications précédentes ;
- un circuit d'alimentation en fluide (3) raccordé fluidiquement audit dispositif de chauffage de fluide à induction électromagnétique à écoulement continu (1, 1', 1") pour l'alimenter en fluide ; et
- un circuit d'alimentation en énergie électrique (6) raccordé électriquement audit enroulement électrique (11) pour l'alimenter électriquement.
